(19) Europäisches Patentamt
European Patent Office
Office européen des brevets

(11) **EP 3 754 521 A1**

(12) **EUROPEAN PATENT APPLICATION**
published in accordance with Art. 153(4) EPC

(43) Date of publication:
**23.12.2020 Bulletin 2020/52**

(51) Int Cl.:
***G06F 17/00*** (2019.01)

(21) Application number: **19870048.6**

(86) International application number:
**PCT/CN2019/100131**

(22) Date of filing: **12.08.2019**

(87) International publication number:
**WO 2020/215533 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2019 CN 201910341472**

(71) Applicant: **Dalian University Of Technology Dalian, Liaoning 116024 (CN)**

(72) Inventors:
• **LUO, Yangjun**
  **Dalian, Liaoning 116024 (CN)**
• **KANG, Zhan**
  **Dalian, Liaoning 116024 (CN)**
• **LIU, Pai**
  **Dalian, Liaoning 116024 (CN)**

(74) Representative: **Hanna Moore + Curley**
  **Garryard House**
  **25/26 Earlsfort Terrace**
  **Dublin 2, D02 PX51 (IE)**

(54) **STRUCTURAL TOPOLOGY OPTIMIZATION METHOD BASED ON MATERIAL-FIELD REDUCTION SERIES EXPANSION**

(57) A structural topology optimization method based on material-field reduced series expansion, which overcomes the problem of low computation efficiency of traditional density-based topology optimization due to too many design variables, a need of relative density or sensitivity filtering, etc. A bounded material field that takes spatial correlation into consideration is defined, the bounded material field is transmitted into a linear combination of a series of undetermined coefficients using a spectral decomposition method, these undetermined coefficients are used as design variables, an optimization model is built based on an element density interpolation model, the topology optimization problem is solved using a gradient-based or gradient-free algorithm, and then a topology configuration with clear boundaries is obtained efficiently. The method can substantially reduce the number of design variables in density method-based topology optimization, and has the natural advantage of completely avoiding the problems of mesh dependency and checkerboard patterns. The method inherits the advantages of simple form, convenient engineering promotion, etc. of the density method, has a fast optimization solving speed, and may ensure the research and development efficiency of the innovative topology design of complex equipment structures.

Fig. 2

EP 3 754 521 A1

## Description

## Technical Field

The present invention belongs to the field of lightweight design of mechanical, aeronautical and astronautical engineering equipment structures, and relates to a structure topology optimization method based on material-field series expansion.

## Background

At present, the main methods for topology optimization of continuum structures include a density-based method, a level set method and a (bidirectional) evolutionary structural optimization method. Among them, the density-based method is widely used in the innovative topology optimization design of mechanical, aeronautical and astronautical engineering structures because of simple model and convenient implementation, and is integrated in many optimization design business software. In the density-based method, the topology optimization problem of discrete variables of 0-1 is converted into an optimization problem of continuous design variables by introducing the relative density of intermediate material between 0 and 1 and the penalizing technique, and the optimization problem is efficiently solved through gradient-based optimization algorithms. However, in the density-based method, the number of design variables depends on the number of finite elements. Secondly, the density-based method itself cannot solve the inherent mesh dependency and the checkerboard patterns in the topology optimization design, there is a need to control the above problems by applying a minimum length-scale through a density filtering method, a sensitivity filtering method, or other filtering methods, thereby causing additional computational cost. Therefore, when dealing with large-scale topology optimization problems with fine meshes, filtering a large number of sensitivities or relative densities and updating relative densities become the most time-consuming steps besides finite element analysis in solving the topology optimization problem. In addition, the traditional density method can only use the gradient-based algorithm to solve problems due to too many design variables, and cannot be applied to complex problems where it is difficult to obtain sensitivities directly. In order to effectively reduce the computational cost caused by iteratively updating large-scale design variables, a feasible option is to propose a new topology optimization method based on material-field reduced series expansion under the density-based method framework, which substantially reduces the number of design variables, improves the optimization solving efficiency, is suitable for solving through gradient-free algorithms, and effectively eliminates mesh dependency and checkerboard patterns.

## Summary

With respect to the disadvantage of too many design variables in the traditional density method when dealing with large-scale complex structure topology optimization problems, the present invention provides a topology optimization design method for substantially reducing the dimensionality of design variable space in density-based topology optimization problems, have the natural advantages of completely avoiding the problems of mesh dependency and checkerboard patterns. The present invention is suitable for innovative topology optimization design of mechanical, aeronautical and astronautical engineering equipment, is suitable for solving through gradient-free algorithms, is beneficial to improving optimization efficiency, and is particularly suitable for solving large-scale three-dimensional structure topology design problems.

To achieve the above purpose, the present invention adopts the following technical solution:
A structure topology optimization method based on material-field reduced series expansion, mainly comprising two parts, i.e. material-field reduced series expansion, and structure topology optimization modeling, specifically including the steps as follows:

Step 1: Discretization and Reduced Series Expansion of Material Field of Design Domain

1.1) Determining a two-dimensional or three-dimensional design domain according to actual conditions and size requirements of a structure, defining a bounded material-field function with spatial dependency, and uniformly selecting several observation points in the design domain to discretize the material field; controlling the number of the observation points within 10,000; limiting the material-field function to [-1, 1], defining the correlation between any two points in the material field by a correlation function that depends on the spatial distance between the two points, that is, $C(x_1,x_2) = \exp(-\|x_1-x_2\|^2/l_c^2)$, where $x_1$ and $x_2$ represent spatial positions of the two points, $l_c$ represents a correlation length, and $\| \|$ represents 2-norm.

1.2) Determining the correlation length, calculating the correlation among all the observation points, and constructing a symmetric positive-definite correlation matrix with a diagonal of 1, wherein the correlation length is not greater than 25% of the length of the long side of the design domain.

1.3) Conducting eigenvalue decomposition on the symmetric positive-definite correlation matrix in step 1.2), sorting eigenvalues from big to small, selecting the first several eigenvalues according to the truncation criterion, wherein the truncation criterion is: the sum of the selected eigenvalues accounts for 99.9999 % of the sum of all eigenvalues.

1.4) Conducting reduced series expansion on the material field, that is, $\varphi(x) = \eta^T \Lambda^{-1/2} \psi^T \mathbf{C}(x)$, where $\eta$ represents the vector of undetermined series expansion coefficients, $\Lambda$ represents a diagonal matrix composed of the eigenvalues selected in 1.3), $\psi$ represents a matrix composed of corresponding eigenvectors in 1.3), and $\mathbf{C}(x)$ represents a correlation vector between x and all observation points obtained through the correlation function in step 1.1).

Step 2. Topology Optimization of Structure

2.1) Firstly, conducting finite element meshing on the design domain, establishing a power-law interpolation relationship between the elastic modulus of a finite element and the material field; secondly, applying loads and boundary conditions in the design domain, to conduct finite element analysis; and finally, building a structure topology optimization model, wherein the optimization objective is to maximize the structural stiffness or minimize the structural compliance, and constraint conditions and design variables are as follows:

a) constraint condition 1: it is required that the material-field function value of each observation point is not greater than 1;

b) constraint condition 2: the structural material consumption is determined as not greater than the material volume constraint upper limit; the upper limit of material volume is 5%-50% of the volume of the design domain;

c) design variables: the vector of design variables is the reduced series expansion coefficient vector $\eta$ of the material field, the value of each design variable being between -100 and 100.

2.2) According to the structure topology optimization model built in step 2.1), conducting sensitivity analysis on optimization objective and constraint conditions; conducting iterative solution using a gradient-based algorithm or gradient-free algorithm, using an active-constraint strategy in the iterative process, only counting constraint conditions where the material-field function value of the current observation point is greater than -0.3 in the algorithm, thus obtaining structural optimal material distribution.

Further, the correlation function in step 1.1) comprises an exponential-model function and a Gaussian model function.

Further, the expression of the power-law interpolation relationship of the elastic modulus of the element

$$E(x) = \left( \frac{1 + \tilde{\varphi}(x)}{2} \right)^p E_0 ,$$

in step 2.1) is where $\tilde{\varphi}(x)$ and $\varphi(x)$ represent Heaviside projection functions, the smoothing parameter increases stepwise from 0 to 9, that is, increases by 1.5 each time after the convergence condition is met; the convergence condition is that the relative change of the objective function between two successive iterations is less than 0.005; $p$ represents a penalization factor, which is 3 in general; and $E_0$ represents an elastic modulus of the material.

Further, the gradient-based algorithm in step 2.2) is the optimality criteria method or method of moving asymptotes, and the gradient-free algorithm is the surrogate model-based method or genetic algorithm.

The present invention has the beneficial effects that when the traditional density-based topology optimization is used in topology design of large-scale complex structures, the optimization efficiency is seriously affected due to many design variables and need of a time-consuming sensitivity filtering or density filtering method. By adopting the method of the present invention to conduct topology optimization design of large-scale complex structures, the dimensionality of design variable space can be substantially reduced, and a topology configuration with clear boundaries can be obtained efficiently. The method inherits the advantages of simple form, convenient engineering promotion, easy understanding and programming, etc. of the density method, has a fast optimization solving speed, is suitable for solving through gradient-free algorithms, and may ensure the research and development efficiency of the innovative topology design of complex equipment structures.

**Description of Drawings**

Fig. 1 shows a design domain of a two-dimensional MBB beam structure provided in embodiments of the present invention. In the figure: F represents a load applied to the structure.

Fig. 2 shows an optimal topology configuration of a two-dimensional MBB beam structure.

Fig. 3 shows a design domain of a three-dimensional cantilever beam structure provided in embodiments of the present invention.

Fig. 4(a) is diagram showing optimal topology design of a three-dimensional cantilever beam structure when the material volume ratio is 7.5%.

Fig. 4(b) is diagram showing optimal topology design of a three-dimensional cantilever beam structure when the material volume ratio is 30%.

## Detailed Description

Specific embodiments of the present invention are described below in detail in combination with the technical solution and accompanying drawings.

A structure topology optimization method based on material-field reduced series expansion. In the topology optimization method, a bounded material field that takes spatial correlation into consideration is defined, the bounded material field is transmitted into a linear combination of a series of undetermined coefficients using a spectral decomposition method, these undetermined coefficients are used as design variables, the topology optimization problem is built using an element density interpolation model and solved by a gradient-based algorithm, and then a topology configuration with clear boundaries is obtained efficiently.

Step 1: Discretization and Reduced Series Expansion of Material Field of Design Domain

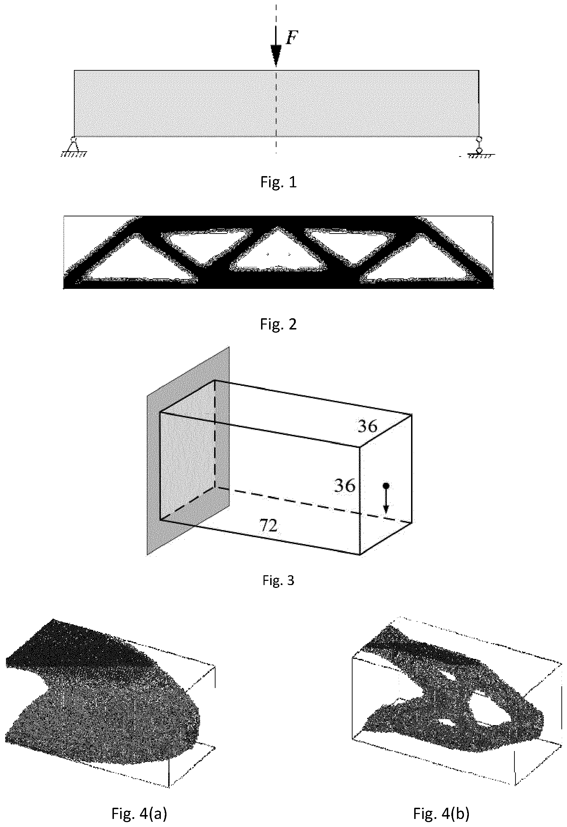

1.1) Determining a two-dimensional or three-dimensional design domain according to actual conditions and size requirements of a structure, uniformly selecting several observation points in the design domain, and defining a bounded material-field function with spatial dependency, wherein Fig. 1 shows a design domain of a two-dimensional MBB beam structure, the design domain is 180mm in length and 30mm in width, and the number N of the uniformly distributed observation points selected is equal to 2700; Fig. 3 shows a design domain of a three-dimensional cantilever beam structure, and the number N of the uniformly distributed observation points selected is equal to 6570; limiting the material-field function to [-1, 1], defining the correlation between any two points in the material field by a correlation function that depends on the spatial distance between the two points, the expression being $C(x_1,x_2) = \exp(-\|x_1-x_2\|^2/l_c^2)$.

1.2) Determining the correlation length, calculating the correlation among all the observation points, and constructing a symmetric positive-definite correlation matrix with a diagonal of 1, wherein the correlation length $l_c$ of the material field in Fig. 1 is equal to 2 mm and 8mm, and the correlation length $l_c$ of the material field in Fig. 3 is equal to 6mm.

1.3) Conducting eigenvalue decomposition on the eigenvalue matrix, sorting eigenvalues from big to small, selecting the first several eigenvalues according to the truncation criterion, wherein the truncation criterion is: the sum of the selected eigenvalues accounts for 99.9999 % of the sum of all eigenvalues.

1.4) Conducting reduced series expansion on the material field, that is, $\varphi(x) = \eta^T \Lambda^{-1/2}\psi^T\mathbf{C}(x)$, where $\eta$ represents the vector of undetermined series expan-

sion coefficients, $\Lambda$ represents a diagonal matrix composed of the eigenvalues selected in 1.3), $\psi$ represents a vector composed of corresponding eigenvectors, and $\mathbf{C}(x)$ represents a correlation vector obtained through the correlation function in 1.1).

Step 2. Topology Optimization of Structure

2.1) Firstly, conducting finite element meshing on the design domain, wherein the number *NE* of the finite element meshes partitioned in the design domain in Fig. 1 is equal to 43200, and the number *NE* of the finite element meshes partitioned in the design domain in Fig. 3 is equal to 93312; establishing a power-law interpolation relationship between the elastic modulus of finite elements and the material field, i.e.

$$E(x) = \left(\frac{1+\tilde{\varphi}(x)}{2}\right)^p E_0 \, ,$$

where $\tilde{\varphi}(x)$ and $\varphi(x)$ represent Heaviside projection functions, the smoothing parameter increases stepwise from 0 to 9, that is, increases by 1.5 each time after the convergence condition is met; the convergence condition is that the relative change of the objective function between two successive iterations is less than 0.005; secondly, in the design domain, applying loads and constraint boundaries in the design domain, and conducting finite element analysis; and finally, building a structure topology optimization model to minimize the structural compliance.

a) constraint condition 1: it is required that the material-field function value of each observation point is not greater than 1;
b) constraint condition 2: the structural material consumption is determined as not greater than the material volume constraint upper limit; the upper limit of material volume ratio in Fig. 1 is 50%, and the upper limit of material volume ratio in Fig. 3 is 7.5% and 30%;
c) design variables: the vector of design variables is the reduced series expansion coefficient vector $\eta$ of the material field, the value of each design variable being between -100 and 100.

2.2) According to the topology optimization model built in step 2.1), conducting sensitivity analysis on objective functions and constraint conditions; conducting iterative solution using a gradient-based algorithm or gradient-free algorithm, using an active-constraint strategy in the iterative process, only counting constraint conditions where the material-field function value of the current observation point is greater than -0.3 in the optimization algorithm, thus obtaining a structural optimal topology configuration, as shown in Fig. 2 and Fig. 4 respectively.

The essence of the present invention is to introduce a material field with spatial dependency, and transform a continuous material field using a spectral decomposition method, to achieve the purpose of reducing the number of design variables, and avoid the checkerboard patterns and mesh dependency inherently. Any methods that simply modify the optimization model and solving algorithm contained in the above-mentioned emobodiments, or makes equivalent replacement on some or all method features (for example, using other power-law interpolation relationships, changing an objective function or constraining specific form), do not deviated from the scope of the present invention.

**Claims**

1. A structural topology optimization method based on material-field reduced series expansion, mainly comprising two parts, i.e. material-field reduced series expansion, and structural topology optimization modeling, including the steps as follows:

   step 1: discretization and reduced series expansion of material field of design domain

   1.1) determining a two-dimensional or three-dimensional design domain according to actual conditions and size requirements of a structure, defining a bounded material-field function with spatial dependency, and uniformly selecting several observation points in the design domain to discretize the material field; controlling the number of the observation points within 10,000; limiting the material-field function to [-1, 1], defining the correlation between any two points in the material field by a correlation function that depends on the spatial distance between the two points, that is, $C(x_1, x_2) = \exp(-\|x_1 - x_2\|^2 / l_c^2)$, where $x_1$ and $x_2$ represent spatial positions of the two points, $l_c$ represents a correlation length, and $\|\|$ represents 2-norm;

   1.2) determining the correlation length, calculating the correlation among all the observation points, and constructing a symmetric positive-definite correlation matrix with a diagonal of 1, wherein the correlation length is not greater than 25% of the length of the long side of the design domain;

   1.3) conducting eigenvalue decomposition on the symmetric positive-definite correlation matrix in step 1.2), sorting eigenvalues from big to small, selecting the first several eigenvalues according to the truncation criterion, wherein the truncation criterion is: the sum of the selected eigenvalues accounts for 99.9999 % of the sum of all eigenvalues; and

   1.4) conducting reduced series expansion on the material field, that is, $\varphi(x) = \eta^T \Lambda^{-1/2} \psi^T \mathbf{C}(x)$, where $\eta$ represents the vector of undetermined series expansion coefficients, $\Lambda$ represents a diagonal matrix composed of the eigenvalues selected in 1.3), $\psi$ represents a matrix composed of corresponding eigenvectors in 1.3), and $\mathbf{C}(x)$ represents a correlation vector between x and all observation points obtained through the correlation function in step 1.1);

   step 2. topology optimization of structure

   2.1) firstly, conducting finite element meshing on the design domain, establishing a power-law interpolation relationship between the elastic modulus of finite elements and the material field; secondly, applying loads and boundary conditions in the design domain, to conduct finite element analysis; and finally, building a structural topology optimization model, wherein the optimization objective is to maximize the structural stiffness or minimize the structural compliance, and constraint conditions and design variables are as follows:

   a) constraint condition 1: it is required that the material-field function value of each observation point is not greater than 1;
   b) constraint condition 2: the structural material consumption is determined as not greater than the material volume constraint upper limit; the upper limit of material volume is 5%-50% of the volume of the design domain;
   c) design variables: the vector of design variables is the reduced series expansion coefficient vector $\eta$ of the material field, the value of each design variable being between -100 and 100;

   2.2) according to the structural topology optimization model built in step 2.1), conducting sensitivity analysis on optimization objective and constraint conditions; conducting iterative solution using a gradient-based algorithm or gradient-free algorithm, using an active-constraint strategy in the iterative process, only counting constraint conditions where the material-field function value of the current observation point is greater than -0.3 in the algorithm, thus obtaining structural optimal material distribution.

2. The structural topology optimization method based on material-field reduced series expansion according to claim 1, wherein the correlation function in step 1.1) comprises an exponential-model function and a Gaussian model function.

3. The structural topology optimization method based on material-field reduced series expansion according to claim 1 or 2, wherein the expression of the power-law interpolation relationship of the elastic modulus of the element in step 2.1) is

$$E\left(x\right)=\left(\frac{1+\tilde{\varphi}\left(x\right)}{2}\right)^{p}E_{0}\,,$$

where $\tilde{\varphi}(x)$ and $\varphi(x)$ represent Heaviside projection functions, the smoothing parameter increases stepwise from 0 to 9, that is, increases by 1.5 each time after the convergence condition is met; the convergence condition is that the relative change of the objective function between two successive iterations is less than 0.005; $p$ represents a penalization factor; and $E_{0}$ represents an elastic modulus of the material.

4. The structural topology optimization method based on material-field reduced series expansion according to claim 1 or 2, wherein the gradient-based algorithm in step 2.2) is the optimality criteria method or method of moving asymptotes, and the gradient-free algorithm is the surrogate model-based method or genetic algorithm.

5. The structural topology optimization method based on material-field reduced series expansion according to claim 3, wherein the gradient-based algorithm in step 2.2) is the optimality criteria method or method of moving asymptotes, and the gradient-free algorithm is the surrogate model-based method or genetic algorithm.

Fig. 1

Fig. 2

Fig. 3

Fig. 4(a)

Fig. 4(b)

## INTERNATIONAL SEARCH REPORT

| International application No. |
| --- |
| **PCT/CN2019/100131** |

**A. CLASSIFICATION OF SUBJECT MATTER**

G06F 17/00(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 材料场, 缩减级数展开, 结构, 拓扑, 优化, 模型, 相关函数, 长度, 截断, 有限元, 设计域, 幂函数, 插值, 观察点, 刚度, 弹性模量, material field, reduced series expansion, structure, topology, optimization, model, correlation function, length, truncation, finite element, design domain, power function, interpolation, observation point, stiffness, elastic modulus

**C. DOCUMENTS CONSIDERED TO BE RELEVANT**

| Category* | Citation of document, with indication, where appropriate, of the relevant passages | Relevant to claim No. |
| --- | --- | --- |
| PX | CN 110110413 A (DALIAN UNIVERSITY OF TECHNOLOGY) 09 August 2019 (2019-08-09)<br>claims 1-5 | 1-5 |
| A | ZHAN, Junjie et al. "Robust Topology Optimization of Hinge-free Compliant Mechanisms with Material Uncertainties Based on a Non-probabilistic Field Model"<br>*Frontiers of Mechanical Engineering,* Vol. 14, No. 2, 24 January 2019 (2019-01-24),<br>sections 2-5 | 1-5 |
| A | LUO, Yangjun et al. "Non-probabilistic Uncertainty Quantification and Response Analysis of Structures with a Bounded Field Model"<br>*Computer Methods in Applied Mechanics and Engineering,*<br>Vol. 347, 08 January 2019 (2019-01-08),<br>pp. 663-678 | 1-5 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 January 2020** | **23 January 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2019/100131** |

**C.    DOCUMENTS CONSIDERED TO BE RELEVANT**

| Category* | Citation of document, with indication, where appropriate, of the relevant passages | Relevant to claim No. |
| --- | --- | --- |
| A | LIU, Pai et al. "Multi-material Topology Optimization Considering Interface Behavior via XFEM and Level Set Method"<br>*Computer Methods in Applied Mechanics and Engineering*,<br>Vol. vol. 308, 24 May 2016 (2016-05-24),<br>pp. 113-133 | 1-5 |
| A | CN 107315872 A (HUAZHONG UNIVERSITY OF SCIENCE AND TECHNOLOGY) 03 November 2017 (2017-11-03)<br>entire document | 1-5 |
| A | CN 104361246 A (HENAN POLYTECHNIC UNIVERSITY) 18 February 2015 (2015-02-18)<br>entire document | 1-5 |

Form PCT/ISA/210 (second sheet) (January 2015)

9

**INTERNATIONAL SEARCH REPORT**
**Information on patent family members**

| International application No. |
| --- |
| **PCT/CN2019/100131** |

| Patent document cited in search report | | | Publication date (day/month/year) | Patent family member(s) | Publication date (day/month/year) |
| --- | --- | --- | --- | --- | --- |
| CN | 110110413 | A | 09 August 2019 | None | |
| CN | 107315872 | A | 03 November 2017 | None | |
| CN | 104361246 | A | 18 February 2015 | None | |

Form PCT/ISA/210 (patent family annex) (January 2015)